(19) Europäisches Patentamt
European Patent Office
Office européen des brevets

(11) EP 1 031 588 B1

(12) EUROPÄISCHE PATENTSCHRIFT

(45) Veröffentlichungstag und Bekanntmachung des Hinweises auf die Patenterteilung:
**03.11.2004 Patentblatt 2004/45**

(51) Int Cl.7: **C08G 18/10**, C08G 18/08, C08L 75/04

(21) Anmeldenummer: **00102245.8**

(22) Anmeldetag: **14.02.2000**

(54) **Weiche, thermoplastische Polyurethan Formmassen**

Soft, thermoplastic polyurethanemoulding compositions

Compositions de moulage de polyurethane thermoplastiques, souples

(84) Benannte Vertragsstaaten:
**AT BE CH CY DE DK ES FI FR GB GR IE IT LI LU MC NL PT SE**

(30) Priorität: **25.02.1999 DE 19907987**

(43) Veröffentlichungstag der Anmeldung:
**30.08.2000 Patentblatt 2000/35**

(73) Patentinhaber: **Bayer MaterialScience AG**
**51368 Leverkusen (DE)**

(72) Erfinder:
- **Winkler, Jürgen Dipl.-Ing.**
  **40764 Langenfeld (DE)**
- **Hoppe, Hans-Georg, Dipl.-Ing.**
  **42799 Leichlingen (DE)**
- **Bräuer, Wolfgang, Dr.**
  **51375 Leverkusen (DE)**
- **Wussow, Hans-Georg, Dr.**
  **40597 Düsseldorf (DE)**

(56) Entgegenhaltungen:
**EP-A- 0 111 682**
**EP-A- 0 816 407**
**US-A- 5 288 549**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 031 588 B1

## Beschreibung

Die Erfindung betrifft weiche, gut entformbare Formmassen aus thermoplastischen Polyurethanen mit geringer Schwindung.

Thermoplastische Polyurethan-Elastomere (TPU) sind seit langem bekannt. Sie sind aufgrund der Kombination hochwertiger mechanischer Eigenschaften mit den bekannten Vorteilen der kostengünstigen thermoplastischen Verarbeitbarkeit von technischer Bedeutung. Durch die Verwendung unterschiedlicher chemischer Aufbaukomponenten lässt sich eine große Variationsbreite mechanischer Eigenschaften erzielen. Eine Übersicht über TPU, ihre Eigenschaften und Anwendungen wird z.B. in Kunststoffe 68 (1978), 819 oder Kautschuk, Gummi, Kunststoffe 35 (1982), 568 gegeben.

TPU werden aus linearen Polyolen, meist Polyester- oder Polyether-Polyolen, organischen Diisocyanaten und kurzkettigen Diolen (Kettenverlängerern) aufgebaut. Zur Beschleunigung der Bildungsreaktion können zusätzlich Katalysatoren zugesetzt werden. Zur Einstellung der Eigenschaften können die Aufbaukomponenten in relativ breiten molaren Verhältnissen variiert werden. Bewährt haben sich molare Verhältnisse von Polyolen zu Kettenverlängerern von 1:1 bis 1:12. Hierdurch ergeben sich Produkte im Bereich von 80 Shore A bis 75 Shore D (nach DIN 53 505).

TPU mit einer Shore A-Härte kleiner 80 können theoretisch auf die gleiche Weise erhalten werden; nachteilig ist jedoch, dass sich die Produkte bei der Herstellung nur schwierig handhaben lassen, da sie schlecht erstarren und fest werden.

TPU mit so geringen Härten zeigen gummielastisches Verhalten. Für die Verarbeitung im Spritzgießsektor sind daher häufig das Entformungsverhalten und die Maßhaltigkeit der Spritzgießteile aufgrund der zu hohen Schwindung nicht ausreichend.

In EP-A 0 134 455 wird offenbart, dass durch die Verwendung von Weichmachern aus speziellen Phthalaten und Phosphaten TPU mit einer Härte von 60 bis 80 Shore A erhalten werden.

In EP-A 0 695 786 werden weiche TPU auf Basis spezieller Polyether/Polyester-Mischungen mit Weichmachern aus Alkylsulfonsäureestern bzw. Benzylbutylphthalat unter Zusatz von anorganischen Füllstoffen hergestellt.

Nachteilig bei beiden Verfahren ist Verwendung von Weichmachern, die den Gebrauch dieser TPU für viele Anwendungen, bei denen es auf die Stoffreinheit des TPU oder die Oberflächenbeschaffenheit des verarbeiteten TPU ankommt, ausschließt.

Aufgabe war es daher, TPU-Formmassen zur Verfügung zu stellen, die weich, gut entformbar und thermoplastisch verarbeitbar sind, geringe Schwindung aufweisen und keine Weichmacher enthalten.

Diese Aufgabe konnte durch die erfindungsgemäßen TPU gelöst werden.

Gegenstand der Erfindung ist eine thermoplastisch verarbeitbare, gut entformbare Formmasse mit geringer Schwindung von <2,5 % (bestimmt gemäß DIN 16 770, Teil 3) und mit einer Härte von 65 bis 85 Shore A (bestimmt gemäß DIN 53 505) bestehend aus einer Mischung von

A) 5 bis 54 Gew.-Teilen eines thermoplastischen Polyurethans mit einer Härte von 60 Shore A bis 75 Shore A (bestimmt gemäß DIN 53 505) erhältlich aus

1) organischem Diisocyanat,
2) Polyester- und /oder Polyether-Polyol mit einem mittleren Molekulargewicht von 500 bis 5000 und
3) kettenverlängerndem Diol mit einem Molekulargewicht von 60 bis 400

und

B) 95 bis 46 Gew.-Teilen eines thermoplastischen Polyurethans mit einer Härte von 76 Shore A bis 90 Shore A (bestimmt gemäß DIN 53 505) erhältlich aus

1) organischem Diisocyanat,
2) Polyester- und/oder Polyether-Polyol mit einem mittleren Molekulargewicht von 500 bis 5000 und
3) einem kettenverlängernden Diol mit einem Molekulargewicht von 60 bis 400,

wobei B) kontinuierlich erhalten wird durch mehrstufige Umsetzung, wobei

a) ein oder mehrere lineare, hydroxylterminierte Polyester- und/oder Polyether-Polyole mit einem Teil eines organischen Diisocyanates in einem NCO/OH-Verhältnis von 2,0:1 bis 5,0:1 kontinuierlich mit hoher Scherenergie (ausreichend, um eine gute Durchmischung der Komponenten zu erreichen) gemischt werden,

b) die in Stufe a) hergestellte Mischung kontinuierlich in einem Reaktor bei Temperaturen >120°C bis zu einem Umsatz >90 %, bezogen auf das Polyol zu einem isocyanat-terminierten Prepolymer umgesetzt wird,

c) das in Stufe b) hergestellte Prepolymer mit dem Rest des organischen Diisocyanates gemischt wird (vorzugsweise beträgt die Menge des Diisocyanatrestes mindestens 2,5 % der Menge des organischen Diisocyanates aus Stufe a)), wobei insgesamt in den Stufen a) bis c) ein NCO:OH-Verhältnis von 2,05:1 bis 6,0:1 und unter Hinzuziehung sämtlicher Komponenten der Stufen a) bis f) ein NCO:OH-Verhältnis von 0,9:1 bis 1,1:1 eingestellt wird,

d) die in Stufe c) hergestellte Mischung auf eine Temperatur <190°C abgekühlt wird,

e) die in Stufe d) erhaltene Mischung kontinuierlich mit einem oder mehreren Diol- Kettenverlängerern intensiv in maximal 5 Sekunden gemischt wird und,

f) die in Stufe e) erhaltene Mischung kontinuierlich in einem Extruder, vorzugsweise einem Zweiwellenextruder, zum thermoplastischen Polyurethan reagiert.

Als organische Diisocyanate 1) kommen beispielsweise aliphatische, cycloaliphatische, araliphatische, heterocyclische und aromatische Diisocyanate in Betracht, wie sie z.B. in Justus Liebigs Annalen der Chemie, 562, Seiten 75 bis 136, beschrieben werden.

Im einzelnen seien beispielhaft genannt: aliphatische Diisocyanate, wie beispielsweise Hexamethylendiisocyanat, cycloaliphatische Diisocyanate wie Isophorondiisocyanat, 1,4-Cyclohexan-diisocyanat, 1-Methyl-2,4-cyclohexan-diisocyanat und 1-Methyl -2,6-cyclohexan-diisocyanat sowie die entsprechenden Isomerengemische, 4,4'-Dicyclohexylmethandiisocyanat, 2,4'-Dicyclohexylmethandiisocyanat und 2,2'-Dicyclohexylmethandiisocyanat sowie die entsprechenden Isomerengemische; aromatische Diisocyanate, wie 2,4-Toluylendiisocyanat, Gemische aus 2,4-Toluylendiisocyanat und 2,6-Toluylendiisocyanat, 4,4'-Diphenylmethandiisocyanat, 2,4'-Diphenylmethandiisocyanat und 2,2'-Diphenylmethandiisocyanat, Gemische aus 2,4'-Diphenylmethandiisocyanat und 4,4'-Diphenylmethandiisocyanat, urethanmodifizierte, flüssige 4,4'-Diphenylmethandiisocyanate oder 2,4'-Diphenylmethandiisocyanate, 4,4'-Diisocyanatodiphenylethan-(1,2) und 1,5-Naphthylendiisocyanat. Vorzugsweise [verwendet] werden 1,6-Hexamethylendiisocyanat, 1,4-Cyclohexandiisocyanat, Isophorondiisocyanat, Dicyclohexylmethandiisocyanat, Diphenylmethandiisocyanat-Isomerengemische mit einem 4,4'-Diphenylmethandiisocyanatgehalt von mehr als 96 Gew.-%; insbesondere 4,4'-Diphenylmethandiisocyanat und 1,5-Naphthylendiisocyanat. Die genannten Diisocyanate können einzeln oder in Form von Mischungen untereinander zur Anwendung kommen. Sie können auch zusammen mit bis zu 15 Mol-% (berechnet auf Gesamt-Diisocyanat) eines Polyisocyanates verwendet werden. Es darf aber höchstens soviel Polyisocyanat zugesetzt werden, dass ein noch thermoplastisch verarbeitbares Produkt entsteht. Beispiele für Polyisocyanate sind Triphenylmethan-4,4',4"-triisocyanat und Polyphenyl-polymethylenpolyisocyanate.

Als Komponente 2) werden bevorzugt lineare hydroxylterminierte Polyole mit einem mittleren Molekulargewicht $\overline{M}_n$ von 500 bis 5000 eingesetzt. Produktionsbedingt enthalten diese oft kleine Mengen an nichtlinearen Verbindungen. Häufig spricht man daher auch von "im wesentlichen linearen Polyolen". Diese sind ebenfalls geeignet. Bevorzugt werden Polyester-, Polyether-, Polycarbonat-Diole oder Gemische aus diesen verwendet.

Geeignete Polyether-Polyole (Polyether-Diole) können dadurch erhalten werden, dass man ein oder mehrere Alkylenoxide mit 2 bis 4 Kohlenstoffatomen im Alkylenrest mit einem Startermolekül, das zwei aktive Wasserstoffatome gebunden enthält, umsetzt. Als Alkylenoxide seien z.B. genannt: Ethylenoxid, 1,2-Propylenoxid, Epichlorhydrin und 1,2- Butylenoxid und 2,3-Butylenoxid. Vorzugsweise Anwendung finden Ethylenoxid, Propylenoxid und Mischungen aus 1,2-Propylenoxid und Ethylenoxid. Die Alkylenoxide können einzeln, alternierend nacheinander oder als Mischungen verwendet werden. Als Startermoleküle kommen beispielsweise in Betracht: Wasser, Aminoalkohole, wie N-Alkyldiethanolamine, beispielsweise N-Methyl-diethanol-amin und Diole, wie Ethylenglykol, 1,3-Propylenglykol, 1,4-Butandiol und 1,6-Hexandiol. Gegebenenfalls können auch Mischungen von Startermolekülen eingesetzt werden. Geeignete Polyetherole sind ferner die hydroxylgruppenhaltigen Polymerisationsprodukte des Tetrahydrofurans. Es können auch trifunktionelle Polyether in Anteilen von 0 bis 30 Gew.-%, bezogen auf die bifunktionellen Polyether, eingesetzt werden, jedoch höchstens in solcher Menge, dass ein noch thermoplastisch verarbeitbares Produkt entsteht. Die im wesentlichen linearen Polyether-Diole besitzen vorzugsweise mittlere Molekulargewichte $\overline{M}_n$ von 500 bis 5000. Sie können sowohl einzeln als auch in Form von Mischungen untereinander zur Anwendung kommen.

Geeignete Polyester-Polyole (Polyester-Diole) können beispielsweise aus Dicarbonsäuren mit 2 bis 12 Kohlenstoffatomen, vorzugsweise 4 bis 6 Kohlenstoffatomen, und mehrwertigen Alkoholen erhalten werden. Als Dicarbonsäuren kommen beispielsweise in Betracht: aliphatische Dicarbonsäuren wie Bernsteinsäure, Glutarsäure, Adipinsäure, Korksäure, Azelainsäure und Sebacinsäure, oder aromatische Dicarbonsäuren, wie Phthalsäure, Isophthalsäure und Terephthalsäure. Die Dicarbonsäuren können einzeln oder als Gemische, z.B. in Form einer Bernstein-, Glutar- und Adipinsäuremischung, verwendet werden. Zur Herstellung der Polyester-Diole kann es gegebenenfalls vorteilhaft

sein, anstelle der Dicarbonsäuren die entsprechenden Dicarbonsäurederivate, wie Dicarbonsäurediester mit 1 bis 4 Kohlenstoffatomen im Alkoholrest, Dicarbonsäureanhydride oder Dicarbonsäurechloride zu verwenden. Beispiele für mehrwertige Alkohole sind Glykole mit 2 bis 10, vorzugsweise 2 bis 6 Kohlenstoffatomen, wie z.B. Ethylenglykol, Diethylenglykol, 1,4-Butandiol, 1,5-Pentandiol, 1,6-Hexandiol, 1,10-Decandiol, 2,2-Dimethyl-1,3-propandiol, 1,3-Propandiol und Dipropylenglykol. Je nach den gewünschten Eigenschaften können die mehrwertigen Alkohole allein oder in Mischung untereinander verwendet werden. Geeignet sind ferner Ester der Kohlensäure mit den genannten Diolen, insbesondere solchen mit 4 bis 6 Kohlenstoffatomen, wie 1,4-Butandiol oder 1,6-Hexandiol, Kondensationsprodukte von ω-Hydroxycarbonsäuren wie ω-Hydroxycapronsäure oder Polymerisationsprodukte von Lactonen, wie z.B. gegebenenfalls substituierten ω-Caprolactonen. Als Polyester-Diole werden vorzugsweise Ethandiol-polyadipate, 1,4-Butandiol-polyadipate, Ethandiol-1,4-butandiol-polyadipate, 1,6-Hexandiol-neopentylglykol-polyadipate, 1,6-Hexandiol-1,4-butandiol-polyadipate und Poly-caprolactone verwendet. Die Polyester-Diole besitzen mittlere Molekulargewichte $\overline{M}_n$ von 500 bis 5000 und können einzeln oder in Form von Mischungen untereinander zur Anwendung kommen.

Als Kettenverlängerungsmittel 3) werden Diole und gegebenenfalls Diamine mit einem Molekulargewicht von 60 bis 400 eingesetzt, vorzugsweise aliphatische Diole mit 2 bis 14 Kohlenstoffatomen, wie z.B. Ethandiol, 1,6-Hexandiol, Diethylenglykol, Dipropylenglykol und insbesondere 1,4-Butandiol. Diamine werden jedoch höchstens in solcher Menge eingesetzt, dass ein noch thermoplastisch verarbeitbares Produkt entsteht. Geeignet sind jedoch auch Diester der Terephthalsäure mit Glykolen mit 2 bis 4 Kohlenstoffatomen, z.B. Terephthalsäure-bis-ethylenglykol oder Terephthalsäure-bis-1,4-butandiol, Hydroxyalkylenether des Hydrochinons, z.B. 1,4-Di(β-hydroxyethyl)-hydrochinon, ethoxylierte Bisphenole, z.B. 1,4-Di(β-hydroxyethyl)-bisphenol A, (cyclo)aliphatische Diamine, wie Isophorondiamin, Ethylendiamin, 1,2-Propylendiamin, 1,3-Propylendiamin, N-Methyl-propylen-1,3-diamin, N,N'-Dimethylethylendiamin und aromatische Diamine, wie 2,4-Toluylendiamin, 2,6-Toluylendiamin, 3,5-Diethyl-2,4-toluylendiamin oder 3,5-Diethyl-2,6-toluylendiamin oder primäre mono-, di-, tri- oder tetraalkylsubstituierte 4,4'-Diaminodiphenylmethane. Bevorzugt werden als Kettenverlängerer Ethandiol, 1,4-Butandiol, 1,6-Hexandiol, 1,4-Di(β-hydroxyethyl)-hydrochinon oder 1,4-Di(β-hydroxyethyl)-bisphenol A verwendet. Es können auch Gemische der oben genannten Kettenverlängerer eingesetzt werden. Daneben können auch kleinere Mengen an Triolen zugesetzt werden. Triole werden jedoch höchstens in solcher Menge eingesetzt, dass ein noch thermoplastisch verarbeitbares Produkt entsteht.

Weiterhin können in geringen Mengen übliche monofunktionelle Verbindungen, z.B. als Kettenabbrecher oder Entformungshilfen, zugesetzt werden. Beispielhaft genannt seien Alkohole wie Oktanol und Stearylalkohol oder Amine wie Butylamin und Stearylamin.

Die TPU sind erhältlich aus dem o.g. Aufbaukomponenten, gegebenenfalls in Gegenwart von Katalysatoren, Hilfsmitteln und/oder Zusatzstoffen. Die Aufbaukomponenten werden in solchen Mengen zur Reaktion gebracht, dass das Äquivalenzverhältnis von NCO-Gruppen zur Summe der NCO-reaktiven Gruppen, insbesondere der OH-Gruppen der niedermolekularen Diole/Triole und Polyole 0,9:1,0 bis 1,1:1,0, vorzugsweise 0,95:1,0 bis 1,10:1,0 beträgt.

Geeignete Katalysatoren sind die nach dem Stand der Technik bekannten und üblichen tertiären Amine, wie z.B. Triethylamin, Dimethylcyclohexylamin, N-Methylmorpholin, N,N'-Dimethylpiperazin, 2-(Dimethylamino-ethoxy) ethanol, Diazabicyclo[2,2,2]octan und ähnliche sowie insbesondere organische Metallverbindungen wie Titansäureester, Eisenverbindungen oder Zinnverbindungen wie Zinndiacetat, Zinndioctoat, Zinndilaurat oder Zinndialkylsalze aliphatischer Carbonsäuren, wie Dibutylzinndiacetat oder Dibutylzinndilaurat oder ähnliche. Bevorzugte Katalysatoren sind organische Metallverbindungen, insbesondere Titansäureester, Eisen- und Zinnverbindungen.

Geeignete Hilfsmittel und/oder Zusatzstoffe sind beispielsweise Gleitmittel, wie Fettsäureester, deren Metallseifen, Fettsäureamide, Fettsäureesteramide und Siliconverbindungen, Antiblockmittel, Inhibitoren, Stabilisatoren gegen Hydrolyse, Licht, Hitze und Verfärbung, Flammschutzmittel, Farbstoffe, Pigmente, anorganische und/oder organische Füllstoffe und Verstärkungsmittel. Verstärkungsmittel sind insbesondere faserartige Verstärkungsstoffe, wie z. B. anorganische Fasern, die nach dem Stand der Technik hergestellt werden und auch mit einer Schlichte beaufschlagt sein können. Nähere Angaben über die genannten Hilfs- und Zusatzstoffe sind der Fachliteratur, beispielsweise der Monographie von J.H. Saunders und K.C. Frisch "High Polymers", Band XVI, Polyurethane, Teil 1 und 2, Verlag Interscience Publishers 1962 bzw. 1964, dem Taschenbuch für Kunststoff-Additive von R.Gächter und H.Müller (Hanser Verlag München 1990) oder DE-A 29 01 774 zu entnehmen.

Weitere Zusätze, die im TPU enthalten sein können, sind Thermoplaste, beispielsweise Polycarbonate und Acrylnitril/Butadien/Styrol-Terpolymere, insbesondere ABS. Auch können andere Elastomere, wie Kautschuk, Ethylen/ Vinylacetatcopolymere, Styrol/Butadiencopolymere sowie andere TPU enthalten sein. Weiterhin zur Einarbeitung geeignet sind handelsübliche Weichmacher wie Phosphate, Phthalate, Adipate, Sebacate und Alkylsulfonsäureester.

Das TPU A) ("weiche Komponente") wird durch Einstellung des molaren Verhältnisses von Polyol zu Kettenverlängerer auf eine Shore A-Härte von 60 bis 75, bevorzugt 65 bis 70, eingestellt.

Das TPU A) kann diskontinuierlich oder kontinuierlich hergestellt werden. Die bekanntesten technischen Herstellverfahren dafür sind das Bandverfahren (GB-A 1 057 018) und das Extruderverfahren (DE-A 1964 834 , DE-A 2 059 570 und US-A 5 795 948).

Das TPU B) ("harte Komponente") wird ebenfalls durch Einstellung des molaren Verhältnisses von Polyol zu Kettenverlängerer auf eine Shore A-Härte von 76 bis 90, bevorzugt 82 bis 88, eingestellt.

Das TPU B) wird kontinuierlich mehrstufig (analog EP-A 0 816 407) wie folgt hergestellt:

Die Mengen der Reaktionskomponenten zur Prepolymerbildung in der Stufe b) werden so gewählt, dass das NCO/OH-Verhältnis der Teilmenge 1 von Diisocyanat 1) und Polyol 2) 2,0:1 bis 5,0:1, bevorzugt 2,05:1 bis 3,0:1 beträgt. Die Komponenten werden kontinuierlich in einem Aggregat mit hoher Scherenergie gemischt. Beispielsweise können ein Mischkopf, vorzugsweise ein hochtouriger Stachelmischer, ein Statikmischer oder eine Düse eingesetzt werden.

Die Prepolymerreaktion in der Stufe b) wird kontinuierlich in einem Reaktor, beispielsweise einem Rohr, durchgeführt. Bevorzugt wird ein Rohr mit Statikmischern oder ein gerührtes Rohr (Rohrmischer) mit einem Länge/Durchmesser-Verhältnis größer 4:1 eingesetzt.

In einer besonders bevorzugten Ausführungsform werden die Stufen a) und b) in den Apparaten Düse/Rohr mit Statikmischern oder im Rohrmischer durchgeführt.

Die Prepolymerreaktion in der Stufe b) sollte erfindungsgemäß im wesentlichen bis zum vollständigen Umsatz, d.h. zu mehr als 90 Mol-%, bezogen auf Polyol, durchgeführt werden. Die Reaktionstemperaturen liegen dabei oberhalb von 120°C, bevorzugt zwischen 140° und 220°C.

In der Stufe c) wird kontinuierlich die Teilmenge 2 des Diisocyanates 1) schnell eingemischt. Bevorzugt werden dazu ein oder mehrere Statikmischer in einem Rohr verwendet. Es können aber auch eine Düse, ein Mischkopf oder die Mischelemente eines Extruders eingesetzt werden.

Die in Stufe c) hergestellte Mischung wird in Stufe d) auf eine Temperatur unterhalb von 190°C, bevorzugt unter 170°C, abgekühlt. Geeignet dafür sind wiederum ein gegebenenfalls gekühltes Rohr oder der mit Förderelementen ausgestattete gekühlte Teil eines Extruders. Bevorzugt wird die Kühlung in einem von außen gekühlten Zweiwellenextruder durchgeführt.

In der Stufe e) wird der Kettenverlängerer 3) in weniger als 5 Sekunden in die gekühlte Prepolymermischung eingemischt. Auch für diese Stufe wird ein mit hoher Scherenergie arbeitendes Mischaggregat bevorzugt. Beispielhaft seien ein Mischkopf, eine Düse oder ein hochtouriger Schneckenextruder mit geringem Mischvolumen genannt. Bevorzugt wird die intensive Mischung durch die Mischelemente eines Extruders durchgeführt.

In der Stufe f) wird in einem Extruder, beispielsweise einem Zweiwellenextruder, die Reaktionsmischung kontinuierlich zum thermoplastischen Polyurethan umgesetzt.

Die Reaktionstemperaturen liegen bei 140° bis 250°C. Die Schneckengehäuse des Extruders werden dabei entweder beheizt oder in einer zweiten Variante weder beheizt noch gekühlt. Dabei findet lediglich eine Wärmeabstrahlung gegen die Umgebung statt. Man kann diese Art der Temperaturführung "quasi-adiabatisch" nennen.

TPU A) (weich) und B) (hart) können zur erfindungsgemäßen Formmasse auf handelsüblichen Granulatmischern gemischt werden. Es besteht aber auch die Möglichkeit, TPU A) und B) vor der eigentlichen Weiterverarbeitung durch eine thermische Umformung in der Schmelze zu mischen, z.B. durch Extrusion, und in ein einheitliches Granulat zu überführen.

Die erfindungsgemäßen Formmassen sind sehr weich (65 bis 85 Shore A) und weisen gute mechanische Eigenschaften auf. Bei der Spritzgießverarbeitung sind sie gut entformbar. Die Spritzgießteile besitzen aufgrund einer geringen Schwindung eine gute Maßhaltigkeit.

Die erfindungsgemäßen Formmassen werden verwendet zur Herstellung von weichen, flexiblen Spritzgießteilen, z.B. Schuhsohlen, Griffschalen, Faltenbälgen und Staubkappen sowie von Extrusionsartikeln, wie z. B. Flachfolien, Filmen und Profilen. Die Formmassen können auch in Kombination mit anderen Thermoplasten durch Mehrkomponenten-Spritzguss und/oder Coextrusion verarbeitet werden.

Die Erfindung soll anhand der nachfolgenden Beispiele näher erläutert werden.

## Beispiele

### Verfahren 1: Mehrstufenverfahren Statikmischer/ZSK

Der Polyester, in dem 150 ppm (bezogen auf Polyester) Zinndioctoat als Katalysator gelöst waren, wurde auf 150°C erhitzt und kontinuierlich in einen Statikmischer (Firma Sulzer) dosiert. Gleichzeitig pumpte man die Teilmenge 1 (2,45 mol) an 4,4'-Diphenylmethandiisocyanat (60°C) in den Statikmischer. Das im Statikmischer entstandene Prepolymer war in ca. 30 Sekunden zu 99 Mol-%, bezogen auf den Polyester, umgesetzt. Durch einen zweiten Statikmischer (Firma Sulzer) wurde die Teilmenge 2 (1,09 mol) des 4,4'-Diphenylmethandiisocyanates innerhalb von 5 Sekunden in das Prepolymer eingemischt. Die Reaktionsmischung wurde in das Gehäuse 1 einer ZSK 83 (Firma Werner&Pfleiderer) dosiert und dort in den folgenden Gehäusen auf ca. 140°C gekühlt. In das Gehäuse 1 wurden 0,4 Gew. % (bezogen auf TPU) Bis-Ethylenstearylamid dosiert. In das Gehäuse 5 dosierte man das Butandiol-1,4, das durch ein kurzes intensiv mischendes Mischelement unter Gehäuse 6 in die Prepolymer-MDI-Mischung eingemischt wurde.

Im letzten Teil der Schnecke wurden die Reaktionskomponenten dann zum TPU umgesetzt. Die Reaktionstemperaturen lagen bei 150 bis 220°C. Die Drehzahl der Schnecke betrug 300 U/min.

Am Ende der Schnecke wurde die heiße Schmelze als Strang abgezogen, im Wasserbad gekühlt und granuliert.

**Verfahren 2: Einstufenverfahren Statikmischer**

Der Polyester wurde mit dem Butandiol vorgelegt, auf ca. 200°C erhitzt und zusammen mit dem auf 180°C erhitzten 4,4'-Diphenylmethandiisocyanat kontinuierlich in einen Statikmischer (Firma Sulzer) dosiert. Im Polyester waren 250 ppm (bezogen auf Polyester) Zinndioctoat als Katalysator gelöst. Nach dem Statikmischer mit einer Verweilzeit von ca. 1 Sekunde wurde der Produktstrom in das erste Gehäuse eines Welding-Extruders (Temperatur ca. 200°C) geführt. Gleichzeitig dosierte man dort 0,8 Gew.% (bezogen auf TPU) Bis-Ethylenstearylamid zu. Die Drehzahl der Schnecke betrug 110 U/min. Am Ende des Extruders wurde die Polymerschmelze durch eine Unterwassergranulierung (Firma Gala) granuliert.

**Verfahren 3: Einstufenverfahren Mischkopf/Band**

Der Polyester, in dem 150 ppm (bezogen auf Polyester) Zinndioctoat als Katalysator gelöst waren, wurde auf 150°C erhitzt und zusammen mit dem Butandiol und dem 4,4' -Diphenylmethandiisocyanat (60°C) kontinuierlich in einem Mischkopf vermischt. Das erhaltene Reaktionsgemisch wurde direkt auf ein Förderband aufgebracht, welches für ca. 3 Minuten kontinuierlich durch eine 140°C beheizte Zone lief. Die am Ende des Förderbandes erstarrte Schmelze wurde in eine ZSK 83 (Temperaturen: 140° bis 200°C) eingezogen. In der Mitte des Extruders dosierte man 0,4 Gew. % (bezogen auf TPU) Bis-Ethylenstearylamid zu. Die Drehzahl der Schnecke betrug 300 U/min. Am Ende der Schnecke wurde die heiße Schmelze als Strang abgezogen, im Wasserbad gekühlt und granuliert.

**Verfahren 4: Zweistufenverfahren ZSK**

Das Polyol, in dem 150 ppm (bezogen auf Polyol) Zinndioctoat als Katalysator gelöst waren, wurde auf 140°C erhitzt und kontinuierlich in das erste Gehäuse einer ZSK 83 (Firma Werner/Pfleiderer) dosiert. In das gleiche Gehäuse wurde die gesamte Menge 4,4'-Diphenylmethandiisocyanat (60°C) dosiert. In das Gehäuse 7 förderte man kontinuierlich Butandiol-1,4. Die 13 Gehäuse der ZSK waren von 140° bis 240°C aufsteigend beheizt. Die Drehzahl der Schnecke betrug 300 U/min. Die Dosiergeschwindigkeit stellte man so ein, dass die Verweilzeit der Reaktionskomponenten in der ZSK ca. 1 Minute betrug. Am Ende der Schnecke wurde die heiße Schmelze als Strang abgezogen, im Wasserbad gekühlt und granuliert.

**Verfahren 5: Einstufenverfahren Rührtopf/Gießplatte**

Der Polyester, in dem 20 ppm (bezogen auf Polyester) Titanylacetylacetonat als Katalysator gelöst waren, wurde auf 180°C erhitzt und zusammen mit dem Butandiol und dem 4,4'-Diphenylmethandiisocyanat (60°C) in einem Reaktionsgefäß durch einen Rührer (2000 U/min) vermischt. Das nach 1 Minute erhaltene Produkt wurde zu einer Platte gegossen und bei 140°C für 30 Minuten getempert.
Die getemperte und abgekühlte Platte wurde geschnitten und granuliert.
Die TPU-Granulate wurden gemäß den Angaben in Tabelle 2 abgemischt und zu Spritzgießkörpern verarbeitet.

**Herstellung der Spritzgießkörper**

Das TPU-Granulat wurde in einer Spritzgießmaschine D 60 (32er Schnecke) der Firma Mannesmann aufgeschmolzen (Massetemperatur ca. 225°C) und zu Stäben (Formtemperatur 40°C; Stabgröße: 80x10x4 mm) bzw. Platten (Formtemperatur 40°C; 125x50x2 mm) geformt.

**Messungen der Versuche**

Die Messung der Härte erfolgte nach DIN 53 505, die Messung des 100 %-Modul nach DIN 53504.
Die Messung der für die Beurteilung der Spritzgießverarbeitung wichtigen Schwindung erfolgte analog DIN 16770 (Teil 3).
In der Tabelle 2 ist die relative Längsschwindung nach Temperung (80°C/15 Stunden) der Spritzgießkörper in % in Bezug zur Formlänge angegeben.

Tabelle 2 :

| Versuchsergebnisse | | | | | | |
|---|---|---|---|---|---|---|
| **Versuch** | **TPU B hart** | **TPU A weich** | **TPU B/TPU A** | **Eigenschaften der Formmasse** | | |
| | | | Gew. Teile/ Gew. Teile | Härte Shore A | 100% Modul [MPa] | Schwindung [%] |
| 1 | TPU 1 | TPU 2 | 90/10 | 84 | 5,1 | 1,1 |
| 2 | TPU 1 | TPU 2 | 70/30 | 76 | 4,5 | 1,9 |
| 3 | TPU 1 | TPU 2 | 50/50 | 76 | 3,7 | 2,3 |
| 4* | TPU 1 | TPU 2 | 45/55 | 74 | 3,9 | 5,8 |
| 5* | TPU 1 | TPU 2 | 40/60 | 75 | 3,8 | 7,0 |
| 6* | TPU 3 | TPU 2 | 50/50 | 82 | 4,2 | 2,7 |
| 7* | TPU 4 | TPU 2 | 50/50 | 76 | 3,7 | 3,5 |
| 8* | | | 100 TPU 5 | 73 | 4,4 | 2,7 |

* Vergleichsbeispiele

**Tabelle 1 : Zusammensetzung der TPU**

| TPU | TPU-Rohstoffe: Polyester | Molgewicht | [mol] | Kettenverlängerer | [mol] | Diisocyanat | [mol] | Härte | Herstellverfahren |
|---|---|---|---|---|---|---|---|---|---|
| 1 | Butandioladipat | 2000 | 1,00 | Butandiol | 2,5 | MDI | 3,5 | 85 Shore A | Mehrstufenverfahren: Verfahren 1 |
| 2 | Ethandioladipat | 1450 | 1,00 | Butandiol | 0,9 | MDI | 1,9 | 68 Shore A | Einstufenverfahren: Verfahren 2 |
| 3 | Butandiol/ Hexandioladipat | 2000 | 1,00 | Butandiol | 2,4 | MDI | 3,5 | 85 Shore A | Einstufenverfahren: Verfahren 3 |
| 4 | Butandioladipat | 2200 | 1,00 | Butandiol | 2,6 | MDI | 3,6 | 85 Shore A | Zweistufenverfahren: Verfahren 4 |
| 5 | Butandioladipat | 1800 | 1,00 | Butandiol | 1,6 | MDI | 2,6 | 73 Shore A | Einstufenverfahren: Verfahren 5 |

Aus den Versuchsergebnissen erkennt man, dass ein weiches TPU mit der für die Spritzgießanwendung benötigten geringen Schwindung (<2,5 %) durch eine Abmischung im Verhältnis hart/weich von 90/10 bis 50/50 mit dem erfindungsgemäßen TPU B erhalten werden kann.
Abmischungen im Verhältnis <50/50 haben eine deutlich erhöhte Schwindung (Vergleichsbeispiel 4 und 5), die im Spritzgießsektor nicht mehr akzeptabel ist.
Abmischungen mit gleich harten, aber nicht erfindungsgemäßen TPU B (Vergleichsbeispiele 6 und 7) führen ebenfalls zu einer erhöhten Schwindung. Eine ebenfalls erhöhte Schwindung besitzt das ohne Abmischung (hart/weich) erhaltene 75±2 Shore A-TPU (Vergleichsbeispiel 8).

**Patentansprüche**

1. Thermoplastisch verarbeitbare, gut entformbare Polyurethan-Formmasse mit geringer Schwindung von <2,5 % und mit einer Härte von 65 bis 85 Shore A (bestimmt gemäß DIN 53 505) bestehend aus einer Mischung von

   A) 5 bis 54 Gew.-Teilen eines thermoplastischen Polyurethans der Härte 60 Shore A bis 75 Shore A (bestimmt gemäß DIN 53 505) erhältlich aus

      1) organischem Diisocyanat,
      2) Polyester- und/oder Polyether-Polyol mit einem mittleren Molekulargewicht zwischen 500 und 5000 und
      3) einem kettenverlängernden Diol mit einem Molekulargewicht zwischen 60 und 400 und

   B) 95-46 Gew.-Teilen eines thermoplastischen Polyurethans der Härte 76 Shore A bis 90 Shore A (bestimmt gemäß DIN 53 505) erhältlich aus

      1) organischem Diisocyanat,
      2) Polyester- und/oder Polyether-Polyol mit einem mittleren Molekulargewicht zwischen 500 und 5000 und
      3) einem kettenverlängernden Diol mit einem Molekulargewicht zwischen 60 und 400,
      4) gegebenenfalls Katalysatoren, Hilfsmittel, Zusatzstoffe, Kettenabbrecher, Entformungsmittel

   wobei B) kontinuierlich erhalten wird durch mehrstufige Umsetzung, wobei

   a) eine oder mehrere lineare hydroxylterminierte Polyesterund/oder Polyether-Polyole mit einem Teil eines organischen Diisocyanates in einem NCO/OH- Verhältnis von 2,0:1 bis 5,0:1 kontinuierlich mit hoher Scherenergie gemischt werden,

   b) die in Stufe a) hergestellte Mischung kontinuierlich in einem Reaktor bei Temperaturen >120°C bis zu einem Umsatz >90% bezogen auf das Polyol, zu einem isocyanat-terminierten Prepolymer umgesetzt wird,

   c) das in Stufe b) hergestellte Prepolymer mit dem Rest des organischen Diisocanates gemischt wird, wobei insgesamt in den Stufen a) bis c) ein NCO:OH-Verhältnis von 2,05:1 bis 6,0:1 und unter Hinzuziehung sämtlicher Komponenten der Stufen a) bis f) ein NCO:OH-Verhältnis von 0,9:1 bis 1,1:1 eingestellt wird,

   d) die in Stufe c) hergestellte Mischung auf eine Temperatur <190°C abgekühlt wird,

   e) die in Stufe d) erhaltene Mischung kontinuierlich mit einem oder mehreren Diol- Kettenverlängerern intensiv in maximal 5 Sekunden gemischt wird und

   f) die in Stufe e) erhaltene Mischung kontinuierlich in einem Extruder zum thermoplastischen Polyurethan reagiert.

2. Polyurethan-Formmasse gemäß Anspruch 1, **dadurch gekennzeichnet, dass** das organische Diisocyanat 1) des thermoplatischen Polyurethans A) und B) 4,4'-Diphenylmethandiisocynat, Isophorondiisocyanat, 1,6-Hexamethylendiisocyanat, 1,5-Naphthylendiisocyanat oder 4,4'-Dicyclohexyldiisocyanat ist.

3. Polyurethan-Formmasse gemäß Anspruch 1, **dadurch gekennzeichnet, dass** das kettenverlängernde Diol 3) des thermoplatischen Polyurethans A) und B) 1,6-Hexandiol, 1,4-Butandiol, Ethylenglykol oder 1,4-Di(β-hydroxyethyl)-hydrochinon ist.

**4.** Verwendung der Polyurethan-Formmasse gemäß einem der Ansprüche 1 bis 3 zur Herstellung von weichen Extrusionsartikeln und Spritzgießteilen.

## Claims

**1.** A thermoplastically processable, readily demouldable polyurethane moulding composition with low shrinkage of < 2.5% and with a Shore A hardness of 65 to 85 (as determined according to DIN 53 505), consisting of a mixture of

A) 5 to 54 parts by weight of a thermoplastic polyurethane of Shore A hardness 60 to 75 (as determined according to DIN 53 505), obtainable from

1) an organic diisocyanate,
2) a polyester and/or polyether polyol with a mean molecular weight between 500 and 5000 and
3) a chain-extending diol with a molecular weight between 60 and 400, and

B) 95 to 46 parts by weight of a thermoplastic polyurethane of Shore A hardness 76 to 90 (as determined according to DIN 53 505), obtainable from

1) an organic diisocyanate,
2) a polyester and/or polyether polyol with a mean molecular weight between 500 and 5000 and
3) a chain-extending diol with a molecular weight between 60 and 400, and
4) optionally catalysts, auxiliary substances, additives, chain terminators and demoulding agents,

wherein B) is obtained continuously by a multi-stage reaction, wherein

a) one or more linear, hydroxyl-terminated polyester and/or polyether polyols is/are continuously mixed, with a high shearing energy, with part of an organic diisocyanate in an NCO:OH ratio of 2.0:1 to 5.0:1,

b) the mixture produced in stage a) is continuously reacted in a reactor at temperatures >120°C up to a conversion > 90% with respect to the polyol, to form an isocyanate-terminated pre-polymer,

c) the prepolymer produced in stage b) is mixed with the remainder of the organic diisocyanate, wherein an NCO:OH ratio of 2.05:1 to 6.0:1 is set overall in stages a) to c) and an NCO:OH ratio of 0.9:1 to 1.1:1 is set taking into consideration all the components of stages a) to f),

d) the mixture produced in stage c) is cooled to a temperature < 190°C,

e) the mixture obtained in stage d) is continuously and intensively mixed with one or more chain-extending diols for a maximum of 5 seconds, and

f) the mixture obtained in stage e) is continuously reacted in an extruder to form the thermoplastic polyurethane.

**2.** A polyurethane moulding composition according to claim 1, **characterised in that** the organic diisocyanate 1) of the thermoplastic polyurethane A) and B) is 4,4'-diphenylmethane diisocyanate, isophorone diisocyanate, 1,6-hexamethylene diisocyanate, 1,5-naphthylene diisocyanate or 4,4'-dicyclohexyl diisocyanate.

**3.** A polyurethane moulding composition according to claim 1, **characterised in that** the chain-extending diol 3) of the thermoplastic polyurethane A) and B) is 1,6-hexanediol, 1,4-butanediol, ethylene glycol or 1,4-di(β-hydroxyethyl)-hydroquinone.

**4.** The use of the polyurethane moulding composition according to one of claims 1 to 3 for the production of non-rigid extruded articles and injection moulded parts.

## Revendications

**1.** Matière à mouler en polyuréthanne apte au travail thermoplastique, bien démoulable et à faible retrait, inférieur à 2,5 %, avec une dureté de 65 à 85 Shore A (détermination selon la norme allemande DIN 53 555) consistant en un mélange de

A) 5 à 54 parties en poids d'un polyuréthanne thermoplastique à dureté de 60 Shore A à 75 Shore A (détermination selon la norme allemande DIN 53 505) obtenu à partir de

1) un diisocyanate organique,
2) un polyester- et/ou polyéther-polyol à un poids moléculaire moyen de 500 à 5 000, et
3) un diol, agent d'allongement des chaînes, de poids moléculaire de 60 à 400, et

B) 95 à 46 parties en poids d'un polyuréthanne thermoplastique à dureté de 76 Shore A à 90 Shore A (détermination selon la norme allemande DIN 53 555) obtenu à partir de

1) un diisocyanate organique,
2) un polyester- et/ou polyéther-polyol au poids moléculaire moyen de 500 à 5 000, et
3) un diol, agent d'allongement des chaînes, au poids moléculaire de 60 à 400,
4) le cas échéant, des catalyseurs, des produits auxiliaires, des additifs, des coupeurs de chaînes, des agents de démoulage,

le composant B) étant obtenu en continu et par une réaction en plusieurs étapes, à savoir

a) mélange en continu sous haute énergie de cisaillement et à un rapport NCO/OH de 2,0:1 à 5,0:1 d'un ou plusieurs polyester- et/ou polyéther-polyols linéaires à groupes terminaux hydroxy avec une partie d'un diisocyanate organique,
b) réaction en continu du mélange préparé en a) dans un réacteur à des températures supérieures à 120°C et jusqu'à un taux de conversion supérieur à 90 % pour le polyol, avec formation d'un prépolymère à groupes terminaux isocyanates,
c) mélange du prépolymère préparé en b) avec le reste du LE A 33455 (00 102 245.8) diisocyanate organique, avec réglage, au total dans les stades a) à c), à un rapport NCO/OH de 2,05:1 à 6,0:1 et, en tenant compte de tous les composants des stades a) à f), à un rapport NCO/OH de 0,9:1 à 1,1:1,1,
d) refroidissement du mélange préparé en c) jusqu'à une température inférieure à 190°C,
e) mélange continu et intensif en 5 s au maximum, du mélange obtenu en d) avec un ou plusieurs diols, agents d'allongement des chaînes, et
f) réaction continue du mélange obtenu en e) dans une extrudeuse, avec formation du polyuréthanne thermoplastique.

**2.** Matière à mouler en polyuréthanne selon la revendication 1, **caractérisée en ce que** le diisocyanate organique 1) des polyuréthannes thermoplastiques A) et B) est le 4,4'-diphénylméthanediisocyanate, l'isophoronediisocyanate, le 1,6-hexaméthylènediisocyanate, le 1,5-naphtylènediisocyanate ou le 4,4'-dicyclohexyldiisocyanate.

**3.** Matière à mouler en polyuréthanne selon la revendication 1, **caractérisée en ce que** le diol, agent d'allongement des chaînes, 3) des polyuréthannes thermoplastiques A) et B) est le 1,6-hexanediol, le 1,4-butanediol, l'éthylèneglycol ou la 1,4-di(β-hydroxyéthyl)hydroquinone.

**4.** Utilisation de la matière à mouler en polyuréthanne selon l'une des revendications 1 à 3 pour la fabrication d'articles souples extrudés et de pièces souples moulées par injection.